# EUROPEAN PATENT SPECIFICATION

(11) **EP 3 637 390 B1**
(45) Date of publication and mention of the grant of the patent: **24.09.2025**
(21) Application number: 18924816.4
(22) Date of filing: 24.08.2018
(51) Int. Cl.: G09B 9/00, G09B 19/00

(54) **CONTENT PRESENTATION SYSTEM**
INHALTSPRÄSENTATIONSSYSTEM
SYSTÈME DE PRÉSENTATION DE CONTENU

(30) Priority: 29.06.2018 JP 2018124689
(43) Date of publication of application: 15.04.2020
(73) Proprietor: Hitachi Systems, Ltd., Tokyo 141-8672 (JP)
(72) Inventor: FUJIWARA, Takayuki, Shinagawa-ku Tokyo 141-8672 (JP); TSUCHIYA, Shintaro, Shinagawa-ku Tokyo 141-8672 (JP); OONISHI, Kentarou, Shinagawa-ku Tokyo 141-8672 (JP); KIKUCHI, Katsuro, Shinagawa-ku Tokyo 141-8672 (JP); NARITA, Yoshihito, Shinagawa-ku Tokyo 141-8672 (JP)
(74) Representative: Papula Oy
(86) International application number: PCT/JP2018/031353
(87) International publication number: WO 2020/003546

(56) References cited:
- WO-A1-2015/185972
- WO-A1-2016/180746
- JP-A- 2010 230 996
- JP-A- 2014 081 947
- JP-A- 2017 518 530
- US-A1- 2007 048 702
- US-A1- 2017 148 214
- US-A1- 2018 090 029
- US-A1- 2018 102 061
- ETIENNE VAN WYK ET AL: "Virtual reality training applications for the mining industry", COMPUTER GRAPHICS, VIRTUAL REALITY, VISUALISATION AND INTERACTION IN AFRICA, ACM, 2 PENN PLAZA, SUITE 701 NEW YORK NY 10121-0701 USA, 4 February 2009 (2009-02-04), pages 53 - 63, XP058114715, ISBN: 978-1-60558-428-7, DOI: 10.1145/1503454.1503465

## Description

### [FIELD OF THE INVENTION]

The present invention relates to a content presentation system for presenting training content including 3D CG for simulating an on-site work of a work target device in a simulated work space.

### [BACKGROUND ART]

For example, in various types of devices such as industrial products, many of them require expert skills in their manufacturing and maintenance works. Therefore, it is important to conduct training for the aforementioned various works for workers who perform the aforementioned works, in particular, those who do not have expert skills.

Today, with the progress of virtual reality and augmented reality technology, it is becoming possible to deem various devices as work target devices and to expand and display information of work instructions or the like on various places of the target device, so that the workers perform the work such as an on-site work of the work target device according to the information.

On the other hand, some of the work target devices have structural elements that can be dangerous factors in the work, such as high temperature, high voltage, etc., and there is an increasing need for a training to suppress the danger such as a burn or an electric shock prior to the on-site work of the work target device having such structural elements.

As a measure to prevent danger of workers in the on-site work and the like, Patent Document 1 proposes a technology for displaying information of a danger prediction scoring table and for scoring the danger prediction of a trainee based on the dangerous item factors narrowed down by the trainees who become workers, so as to improve the workers' awareness of dangers.

### [CITATION LIST]

### [PATENT LITERATURE]

[Patent Document 1] Japanese Unexamined Patent Publication No. 2008-139479
[Patent Document 2] PCT application WO 2015/185972 A1.

### [SUMMARY OF THE INVENTION]

### [TECHNICAL PROBLEM]

However, even though it is possible to acquire the knowledge of the danger of the trainee using the danger prediction scoring table by the technology described in Patent Document 1, since there is no consideration for simulating an accident, there is a problem that it is impossible to secure sufficient safety when performing the on-site work of the work target device.

The present invention has been made to solve the conventional problem as described above, and for the purpose of providing a content presentation system that causes a simulated accident in a training stage so as to strongly impress a trainee with a risk of an accident, thereby making it possible to securely suppress the risk of the accident in the on-site work of the work target device.

### [MEANS TO SOLVE THE PROBLEM]

In order to solve the above problem, a content presentation system according to claim 1 is a defined. Accordingly, the content presentation system presents a training content to a trainee (R1) based on a three-dimensional shape information of a work target device and a work procedure, and causes a simulated work of an on-site work executed in accordance with the work procedure in a simulated work space of virtual reality or augmented reality, the content presentation system comprising: a content output device (3) that has a storage unit (36a) that stores the training content that includes the three-dimensional shape information of the work target device and evaluation criterion information on a work operation of the work procedure and an output unit (35e, 43) that outputs the training content so as to be presented to the trainee; an operation measurement device (35a, 65a) that acquires a three-dimensional work operation of a worker (R2) who executes the on-site work or the trainee as measurement information; an evaluation criterion creation device (35b, 65b) that creates evaluation criterion information on the work operation based on the measurement information of the three-dimensional work operation; and a content creation device (35c, 65c) that creates the training content based on the measurement information of the three-dimensional work operation and the evaluation criterion information, wherein the evaluation criterion creation device, when predetermined information is inputted that can be an accident occurrence factor in the on-site work from a predetermined three-dimensional body motion of the worker or the trainee, adjusts the evaluation criterion information on the work operation related to the information in a specific stage or other stage of the work procedure, and the content creation device updates the training content, so as to increase a probability of occurrence of a simulated accident with respect to the work operation in the specific stage or other stage during the simulated work, and impress the trainee with the occurrence of the accident at occurrence of the simulated accident.

With this configuration, the content presentation system according to claim 1 of the present invention can strongly impress the trainee with the risk of the occurrence of the accident when experiencing the on-site work of the work target device in the simulated work space in the training stage. As a result, when the trainee finishes the training and executes the on-site work of the work target device as a worker at the work site, the worker can be strongly aware of the risk of the occurrence of the accident, thereby making it possible to remarkably reduce the risk of the occurrence of the accident, compared to the conventional on-site works in which the aforementioned awareness has been insufficient.

A content presentation system according to claim 2 of the present invention is characterized in that the content creation device impresses the trainee with the occurrence of the simulated accident by sound, text message, light, vibration, or the like.

By this configuration, the content presentation system according to claim 2 of the present invention can more strongly and securely impress the trainee who experience the simulated accident in the training stage with the risk of the occurrence of the accident, thereby making it possible to more securely suppress the risk in the work site.

A content presentation system according to claim 3 of the present invention further comprises a dangerous action determination processing unit (75b, 76b) that extracts a work item having a high occurrence probability of the simulated accident and defines a risk occurrence factor for the work item; and a dangerous action suppression control unit (65f) that notifies the worker of the dangerous action caused by the risk occurrence factor in the work of the work item in the on-site work.

By this configuration, the content presentation system according to claim 3 of the present invention enables the trainee who experienced the occurrence of the accident in the training stage to suppress the risk in a step-wise manner when executing the work at the work site as the worker.

A content presentation system according to claim 4 of the present invention further comprises: a creation unit (75a, 76a) that creates a work report describing a work environment of the on-site work; and an update unit (65f) that determines whether or not there is a description that the work environment has changed from a current state between the created work report and an existing work report already created, and updates the definition of the risk occurrence factor for the work item, in accordance with the changed environment, in the case that there is the description.

By this configuration, the content presentation system according to claim 4 of the present invention can suppress the risk in a stepwise manner in accordance with the change of the current state even when there is a change in the current state in the on-site work.

A content presentation system according to claim 5 of the present invention further comprises: a setting unit (75b) that sets a warning item to be executed in a step-wise manner during the on-site work including the work item, based on index information including a definition of the risk subject and a worker skill of the worker; and a warning unit (65f) that gives a warning in a step-wise manner based on the warning item during the on-site work.

By this configuration, the content presentation system according to claim 5 of the present invention makes it possible for the trainee who can experience an accident by the training, after finishing the training, to suppress the risk in a step-wise manner in accordance with the own skill and the like at the time when working in the site as a worker, with respect to the items having a high accident occurrence rate during the training.

### [EFFECT OF THE INVENTION]

By the present invention, it is possible to provide a content presentation system that causes a simulated accident in a training stage so as to strongly impress the trainee with the risk of the accident, thereby making it possible to securely suppress the risk of an accident in the on-site work of the work target device.

### [BRIEF DESCRIPTION OF THE DRAWINGS]

FIG. 1 is an overall configuration diagram of a content presentation system according to one embodiment of the present invention.
FIG. 2 is a block diagram showing functional configurations of a training management server and a training support terminal of a content presentation system according to one embodiment of the present invention.
FIG. 3 is a block diagram showing functional configurations of a site management server and a site support terminal of a content presentation system according to one embodiment of the present invention.
FIG. 4 is a diagram showing an operation sequence between a site management server and a site support terminal according to a first dangerous action suppression control of a content presentation system according to one embodiment of the present invention.
FIG. 5 is a diagram showing an operation sequence between a site management server and a training management server according to a first dangerous action suppression control of the content presentation system according to the embodiment of the present invention.
FIG. 6 is a diagram showing an operation sequence between a training management server and a training support terminal according to a first dangerous action suppression control of a content presentation system according to one embodiment of the present invention.
FIG. 7 is a schematic diagram showing a display example of an evaluation determination result concerning an accident simulatively occurred during a simulated work in a simulated work space in step S64 of FIG. 6.
FIG. 8 is a diagram showing an operation sequence between a site management server and a site support terminal according to a second dangerous action suppression control of a content presentation system according to one embodiment of the present invention.
FIG. 9 is a flowchart showing a third dangerous action suppression control operation at the site support terminal of the content presentation system according to one embodiment of the present invention.
FIG. 10 is a flowchart showing a fourth dangerous action suppression control operation of the content presentation system according to one embodiment of the present invention.
FIG. 11 is an explanatory diagram of progress table contents showing a progress status of a plurality of tasks managed by a work management server in a content presentation system according to one embodiment of the present invention.
FIG. 12 is an explanatory diagram of progress table contents showing a work procedure of a first task out of a plurality of tasks shown in FIG. 11 and contents data material including a report from experts at each stage of the work procedure and presented to the trainee.
FIG. 13 is a a measurement data sheet for collecting the contents data material shown in FIG. 12 from experts.

### [DETAILED DESCRIPTION OF THE INVENTION]

Hereinafter, an embodiment of a content presentation system 1 according to the present invention will be described with reference to the drawings. The present embodiment mainly discusses a case in which the training content of the maintenance work of the work target device is presented to the trainee R1, however the present invention can be applied to cases in which the training content of various on-site works for systems and facilities is presented.

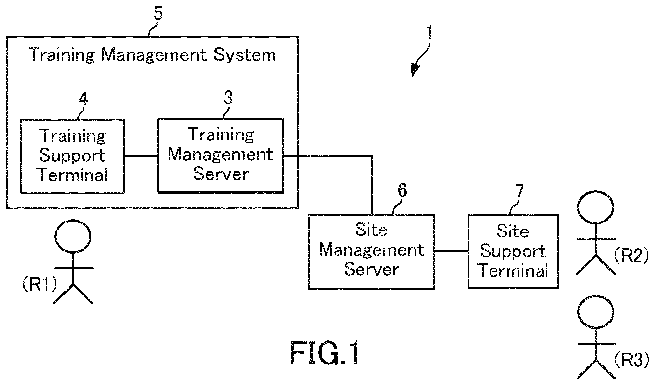

As shown in FIG. 1, a content presentation system 1 according to the present invention has a training management system 5, a site management server 6, and a site support terminal 7, respectively connected to a network. The training management system 5 that manages training related to the on-site work of the work target device by the trainee R 1 in a simulated work space includes a training management server 3 and a training support terminal 4.

In the content presentation system 1, the training management server 3 and the site management server 6 are constituted by information processing devices such as PC (personal computer), for example. As for the training support terminal 4 and the site support terminal 7, for example, a portable terminal such as a smartphone, a tablet, an HMD (Head Mount Display), or the like is used.

Each of the training management server 3, the training support terminal 4, the site management server 6, and the site support terminal 7 has a three-dimensional graphic data drawing function. In other words, the content presentation system 1 not only makes use of information on the maintenance work of the work target device mutually between the training and the site, but also aggressively adopts 3D CG for processing images used for training and images used for on-site information collection. Particularly, in the present embodiment, in the training, 3D CG data of the work target device is used, and at the site, extended display (AR: Augmented Reality) such as a work instruction for the actual work target device is performed, based on the 3D CG of the work target device described above.

First, explanation will be given to the information collection for training content creation related to the maintenance work of the work target device (actual machine) by the model worker R2 at the site, and an outline of the work of training for the trainee R1 based on the training content.

In FIG. 1, among the site management server 6 and the site support terminal 7 operated at the site, the site support terminal 7 stores the operation information (activity information) of the maintenance work by the model worker R2 on the actual work target device, together with body motion information such as voice, action of hands and feet, and line of sight, as three-dimensional work motion record (hereinafter simply referred to as "work operation"). Here, the image of the work target device is processed as 3D CG data.

When collecting the above-described body motion information, it is notified beforehand to the model worker R2 that a sensor for detecting body motion information such as an HMD, a glove with a DoF sensor, a microphone or the like is to be worn. This notification is made, for example, by displaying a message on the display unit 73 of the site support terminal 7. Upon completion of the above-described maintenance work, the site support terminal 7 distributes the work operation record stored during the maintenance work to the site management server 6.

Based on the work operation record distributed from the site support terminal 7, the site management server 6 creates training contents for simulating the maintenance work, and stores the training contents. In addition, the site management server 6 distributes the work operation record distributed from the site support terminal 7 to the training management server 3.

The training management server 3 creates training content for causing a simulated work to be executed based on the work operation record distributed from the site management server 6, and stores the training content. Thereafter, the training management server 3 transmits the stored training content to the training support terminal 4, for example, based on a training start command based on a predetermined operation by the trainee R1.

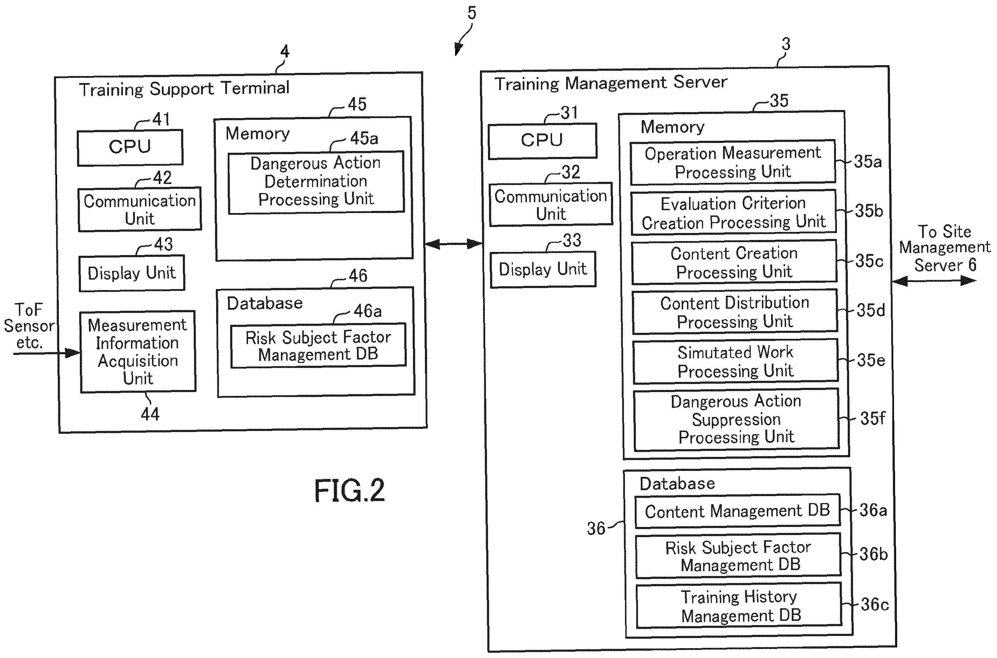

The training support terminal 4 receives the training content delivered from the training management server 3 and causes the simulated work to be executed based on the training content. To be specific, the training support terminal 4 displays the 3D CG data of the work target device on the display unit 43 (see FIG. 2) based on the training content. Thus, in the training support terminal 4, an environment for allowing the trainee R1 to execute a simulated work (training) on maintenance work of the work target device in a simulation space of virtual reality (VR) is set up.

During execution of the simulated work by the trainee R1 by the simulated space, the training support terminal 4 displays the 3D CG data of the work target device on the display unit 43 based on the training content, and displays the 3D CG data in accordance with the work procedure of the maintenance work, and displays a work instruction conforming to the work procedure of the maintenance work composed of, for example, text sentences or the like on the display unit 43 in accordance with the progress of the simulated work and corresponding to each stage. As a result, the trainee R1 can train maintenance work of the work target device in accordance with work instructions displayed together with the work target device displayed in 3D CG in the virtual reality simulated work space.

In the above-described training (simulated work), the training support terminal 4 takes in the operation information (activity information) of the maintenance work on the virtual work target device of the trainee R1, as a training work operation record B together with the body motion information such as action of hands and arms and line of sight collected by a body motion information detection sensor. Further, the training support terminal 4 takes in a work operation record (hereinafter referred to as "collection time work operation record A") at the time of maintenance work executed by the model worker R2, which is already acquired from the site management server 6 by the training management server 3, and evaluates the accuracy (skill level) of the work operation of the work procedure by the trainee R1 based on the training time work operation record B and the collection time work operation record A.

In the process of evaluating the accuracy of work, the training support terminal 4 compares each value of the training time work operation record B and the collection time work operation record A, and gives a higher evaluation value as the value of the training time work operation record B is closer to the value of the collection time work operation record A, while giving a low evaluation value when the value of the training time work operation record B deviates from to the value of the collection time work operation record A by more than the predetermined threshold value. At this time, the training support terminal 4 images and displays the evaluation result on the display unit 43, so that the trainee R 1 can visually check it.

The 3D CG data handled by the training support terminal 4 and the site support terminal 7 in the training and the on-site information collection has three-dimensional coordinates. Therefore, by comparing the three-dimensional coordinates of the hand of the model worker R2 collected in the site in advance and the three-dimensional coordinates of the hand of the trainee R1 under training, it is possible to determine which part of the device the hand of the trainee R1 touched.

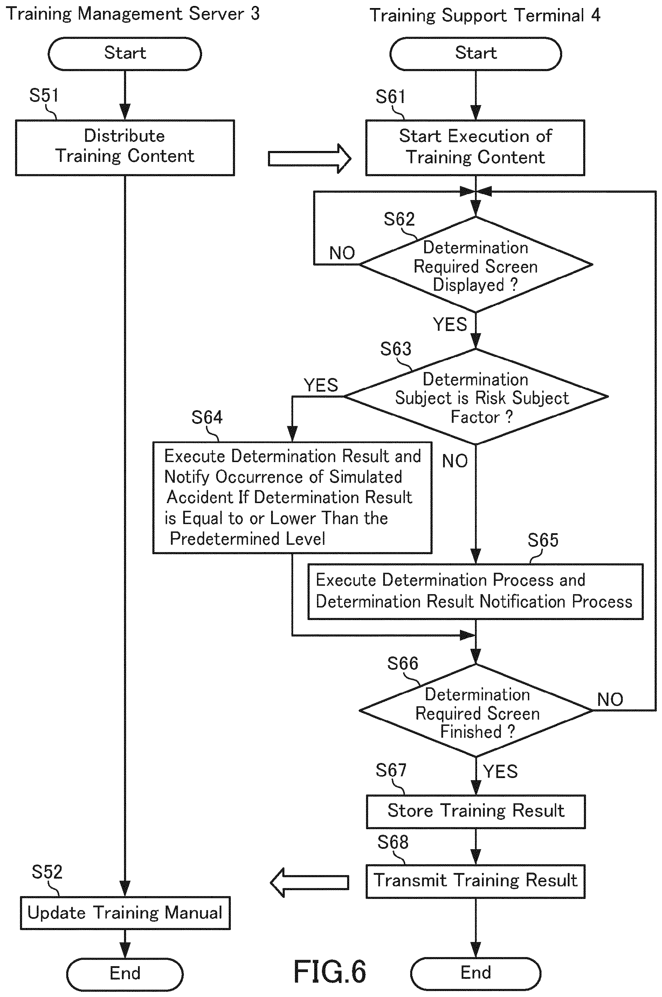

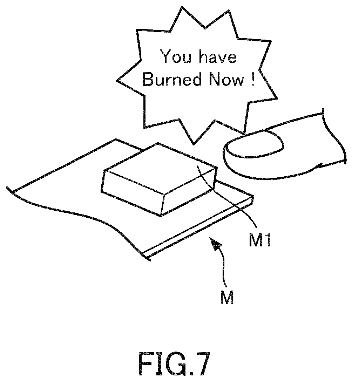

In particular, in the present embodiment, with respect to 3D CG processing under training, the content presentation system 1 determines a situation in which the hand or body of the trainee R1 is close to or in contact with a component corresponding to the risk subject factor (for example, the high-temperature generating element, the high voltage generating element) of the work target device is determined, and notifies that the work performed by trainee R1 is in a state close to failure or that failure has been made, in a way that strongly impresses trainee R1. This notification process will be described in detail later with reference to FIGS. 6 and 7.

The configuration and operation of the content presentation system 1 according to the present embodiment will be described in detail based on the outline of information collection and training at the site as described above.

First, the configuration of each device of the content presentation system 1 will be described. In the content presentation system 1, the training management server 3 and the training support terminal 4 included in the training management system 5 have, for example, the configuration shown in FIG. 2.

As shown in FIG. 2, the training management server 3 has a CPU 31, a communication unit 32, a display unit 33, a memory 35, and a database (hereinafter simply referred to as "DB") 36. The CPU 31 controls the overall operation of the training management server 3. The communication unit 32 communicates information with the training support terminal 4 and the site management server 6. The display unit 33 displays various kinds of information, and is constituted by, for example, an LCD or the like.

The memory 35 includes, for example, a ROM, a RAM, and the like, and stores various kinds of information such as a program for realizing a functional operation as the training management system 5. In this example, the memory 35 stores each of the programs for realizing a functional operation of processing units: the operation measurement processing unit 35a, the evaluation criterion creation processing unit 35b, the content creation processing unit 35c, the content distribution processing unit 35d, the simulated work processing unit 35e, and the dangerous action suppression processing unit 35f. Each of these processing units is realized by the CPU 31 reading each program from the memory 35 and executing the program.

The operation measurement processing unit 35a receives the activity information of the trainee R1 acquired by the measurement information acquisition unit 44 of the training support terminal 4, which will be described later, via the communication unit 32 and processes it as measurement information of the three-dimensional work operation of the trainee R1 .

The evaluation criterion creation processing unit 35b creates evaluation criterion information on the work operation of the trainee R1 based on the measurement information of the three-dimensional work operation of the trainee R1. The evaluation criterion information is created in correspondence to the work operation in a specific stage (a work stage targeting a risk subject factor) or another stage in a work procedure of a maintenance work(simulated work) of a work target device executed by the trainee R1 in a simulated work space to be described later.

The content creation processing unit 35c creates a training content based on the measurement information of the three-dimensional work operation of the trainee R1 processed by the operation measurement processing unit 35a and the evaluation criterion information created by the evaluation criterion creation processing unit 35b.

The content distribution processing unit 35d distributes the training content created by the content creation processing unit 35c to the site management server 6 via the communication unit 32.

The simulated work processing unit 35e cooperates with the training support terminal 4 to perform processing for realizing the maintenance work of the work target device as a simulated work. To be specific, the simulated work processing unit 35e has the display unit 43 of the training support terminal 4 display the training contents based on the three-dimensional shape information of the work target device and the work procedure to presents the training contents to the trainee R 1, and executes control for having the maintenance work executed in accordance with the work procedure in the simulated work space of the virtual reality or the augmented reality.

During the simulated work in the simulated work space, the dangerous action suppression processing unit 35f performs control for suppressing dangerous actions such as the trainee R 1 contacting the risk subject factor of the work target device. The term "risk subject factor" refers to an element that poses a danger to the trainee R1 in working on the place, such as a high temperature generating element, a high voltage generating element, or a high place work to be described later.

The DB 36 has a content management DB 36a, a risk subject factor management DB 36b, and a training history management DB 36c. The content management DB 36a stores the above-described training content, and the risk subject factor management DB 36b stores and manages information on the risk subject factor to be used for the dangerous action suppression control of the dangerous action suppression processing unit 35f. The training history management DB 36c stores and manages history information that has been trained for the maintenance work of the work target device by the simulated work in the simulated work space.

Also as shown in FIG. 2, the training support terminal 4 includes a CPU 41, a communication unit 42, a display unit 43, a measurement information acquisition unit 44, a memory 45, and a DB 46. The CPU 31 controls the operation of the entire training support terminal 4. The communication unit 42 communicates information with the training management server 3. The display unit 43 displays various kinds of information such as information on a simulated work space used for executing the maintenance work of the work target device.

The measurement information acquisition unit 44 acquires detection signals of various sensors such as a ToF (Time Of Flight) sensor worn by the trainee R1 as activity information of the three-dimensional work operation of the trainee R1.

The memory 45 includes, for example, a ROM, a RAM, and the like, and stores various kinds of information such as a program for realizing a functional operation as the training management system 5. In this example, the memory 45 stores a program for realizing the dangerous action determination processing unit 45a. This means that the dangerous action determination processing unit 45a is realized by the CPU 41 reading the program from the memory 45 and executing the program. During the simulated work in the simulated work space, the dangerous action determination processing unit 45a performs control for determining the dangerous action such as the trainee R 1 contacting the risk subject factor of the work target device.

The DB 46 has a risk subject factor management DB 46a. The risk subject factor management DB 46a stores and manages the information of the risk subject factor determined as the dangerous action by the dangerous action determination processing unit 45a.

In the configuration shown in FIG. 2, the content management DB 36a corresponds to the storage unit of the present invention. Further, the simulated work processing unit 35e and the display unit 43 correspond to the output unit of the present invention. In addition, the training management server 3 having the content management DB 36a, the simulated work processing unit 35e, and the display unit 43 constitutes the content output device of the present invention. The operation measurement processing unit 35a, the evaluation criterion creation processing unit 35b, and the content creation processing unit 35c constitute an operation measurement device, an evaluation criterion creation device, and a content creation device of the present invention, respectively.

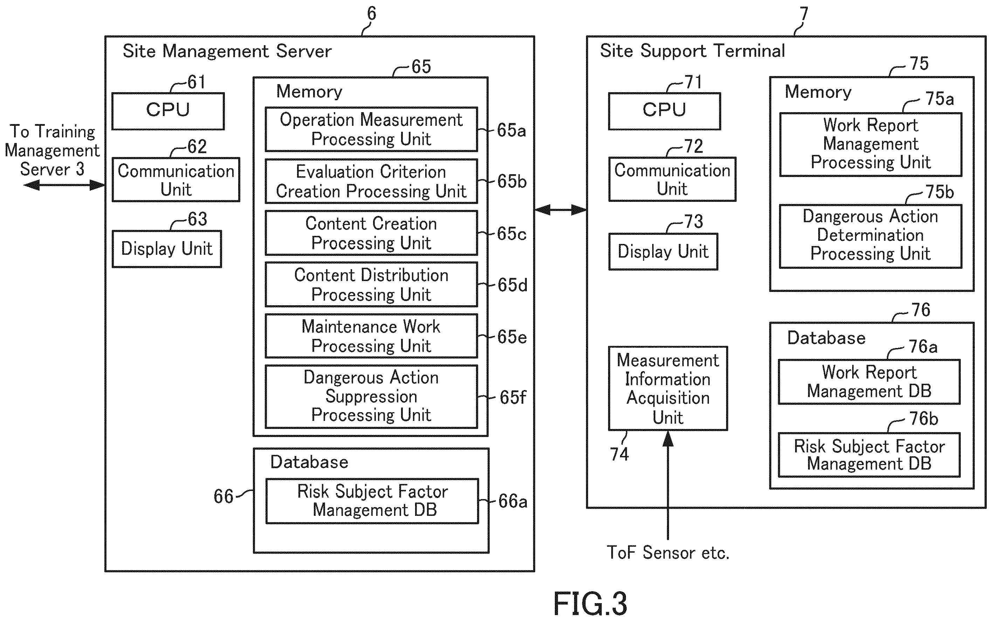

In the content presentation system 1, the site management server 6 and the site support terminal 7 have the configuration shown in FIG. 3.

As shown in FIG. 3, the site management server 6 has a CPU 61, a communication unit 62, a display unit 63, a memory 65, and a DB 66. The CPU 61 controls the operation of the entire site management server 6. The communication unit 62 communicates information with the site support terminal 7 and the training management server 3. The display unit 63 displays various kinds of information, and is constituted by, for example, an LCD or the like.

The memory 65 includes, for example, a ROM, a RAM, and the like, and stores programs and the like for realizing various functional operations and various kinds of information. In this example, the memory 65 stores each program for realizing each of processing units: an operation measurement processing unit 65a, an evaluation criterion creation processing unit 65b, a content creation processing unit 65c, a content distribution processing unit 65d, a maintenance work processing unit 65e, and a dangerous action suppression processing unit 65f. Each of these processing units is realized by the CPU 61 reading the respective program from the memory 65 and executing the program.

The operation measurement processing unit 65 a receives an activity information of a model worker R2 or a worker R3 acquired by the measurement information acquisition unit 74 of the site support terminal 7 to be described later via the communication unit 72 and processes the activity information as the measurement information of the three-dimensional work operation of the model worker R2 or the worker R3. Here, the worker R3 is, for example, the trainee R1 who has completed training in the training management system 5.

The evaluation criterion creation processing unit 65b creates evaluation criterion information on the work operation of the model worker R2 or the worker R3 based on the measurement information of the three-dimensional work operation of the model worker R2 or the worker R3, for example. The evaluation criterion information is respectively created in correspondence to the work operation in the specific stage or another stage in a work procedure using the actual device of the work target device executed by the model worker R2 or the worker R3 using an AR screen of a display unit 73 of the site support terminal 7 to be described later.

Based on the measurement information of the three-dimensional work operation of the model worker R2 processed by the operation measurement processing unit 65a and the evaluation criterion information created by the evaluation criterion creation processing unit 65b, the content creation processing unit 65c creates a training content.

The content distribution processing unit 65d distributes the training content created by the content creation processing unit 65c to the training management server 3 via the communication unit 62.

The maintenance work processing unit 65e performs processing for cooperating with the site support terminal 7 and causing the worker R3 to execute the maintenance work of the work target device. To be specific, the maintenance work processing unit 65e additionally displays (AR display) a work instruction and the like based on the work procedure of the maintenance work with respect to the work target device (actual machine) on the display unit 73 constituting the site support terminal 7, composed of, for example, a transmissive screen of HMD, to thereby present the work instruction to the worker R3. As a result, the worker R3 can execute the maintenance work of the work target device while confirming the work instruction displayed in AR.

During execution of the maintenance work using the AR display screen, the dangerous action suppression processing unit 65f performs control to suppress a dangerous action such as the worker R 3 contacting the risk subject factor of the work target device.

The DB 66 has a risk subject factor management DB 66a. The risk subject factor management DB 66a stores and manages information on the risk subject factor to be used for the dangerous action suppression control of the dangerous action suppression processing unit 65f.

Also, as shown in FIG. 3, the site support terminal 7 includes a CPU 71, a communication unit 72, a display unit 73, a measurement information acquisition unit 74, a memory 75, and a DB 76. The CPU 71 controls the operation of the entire site support terminal 7. The communication unit 72 communicates information with the site management server 6. The display unit 73 displays various kinds of information such as an AR display screen used for maintenance work of the work target device (real machine).

The measurement information acquiring unit 74 acquires detection signals of various sensors such as ToF sensor worn by the model worker R2 or the worker R3 as the activity information of the three-dimensional work operation of the model worker R2 or the worker R3.

The memory 75 includes, for example, a ROM, a RAM, and the like, and stores programs and the like for realizing various functional operations and various kinds of information. In this example, the memory 75 stores programs for realizing the work report management processing unit 75a and the dangerous action determination processing unit 75b. This means that the work report management processing unit 75a and the dangerous action determination processing unit 75b are realized by the CPU 71 reading the program from the memory 75 and executing the program. The work report management processing unit 75a creates a work report on the maintenance work of the work target device using the AR display screen. The dangerous action determination processing unit 75b performs control for determining a dangerous action during execution of the maintenance work, for example, the worker
R3 comes into contact with the risk subject factor of the work target device.

The DB 76 has a work report management DB 76a and a risk subject factor management DB 76b. The work report management DB 76a stores and manages the work report information created by the work report management processing unit 75 a. The risk subject factor management DB 76b stores and manages information of the risk subject factor determined as the dangerous action by the dangerous action determination processing unit 75b.

In the configuration shown in FIG. 3, the operation measurement processing unit 65a, the evaluation criterion creation processing unit 65b, and the content creation processing unit 65c constitute an operation measurement device, an evaluation criterion creation device, and a content creation device of the present invention, respectively.

Next, a dangerous action suppression function in the content presentation system 1 (see FIGS. 1 to 3) according to this embodiment will be described. This function is used to suppress an accident such as a contact accident to the risk subject factor of the target work device when the trainee R1 finishes the training and performs the maintenance work of the target work device (the actual machine) as the worker R3 on the site. In the present embodiment, particularly, the following first to fourth dangerous action suppression functions will be described as an example

### (First risk action suppression function)

The first dangerous action suppression function causes a simulated accident during maintenance work in the simulated working space in a training stage and suppresses the dangerous action by strongly impressing the trainee R1 with the occurrence of the accident.

In order to realize this function, for example, the dangerous action suppression processing unit 35f of the training management server 3 adjusts the evaluation criterion information on the work operation at the specific stage of the maintenance work related to the information or at other stages, when a predetermined information that can be an accident occurrence cause of the maintenance work is inputted from the predetermined three-dimensional body motion of the model worker R2.

In addition, the dangerous action suppression processing unit 35f increases the probability of occurrence of a simulated accident with respect to the work operation at the specific stage during the simulated work or another stage by the content creation processing unit 35c, and causes the trainee, and controls to update the training content that strongly impresses the trainee R1 with the accident occurrence.

In addition, the dangerous action suppression processing unit 35f is configured to give an impression to the trainee R1 by a sound, text message, light, vibration, and the like, of the occurrence of a simulated accident.

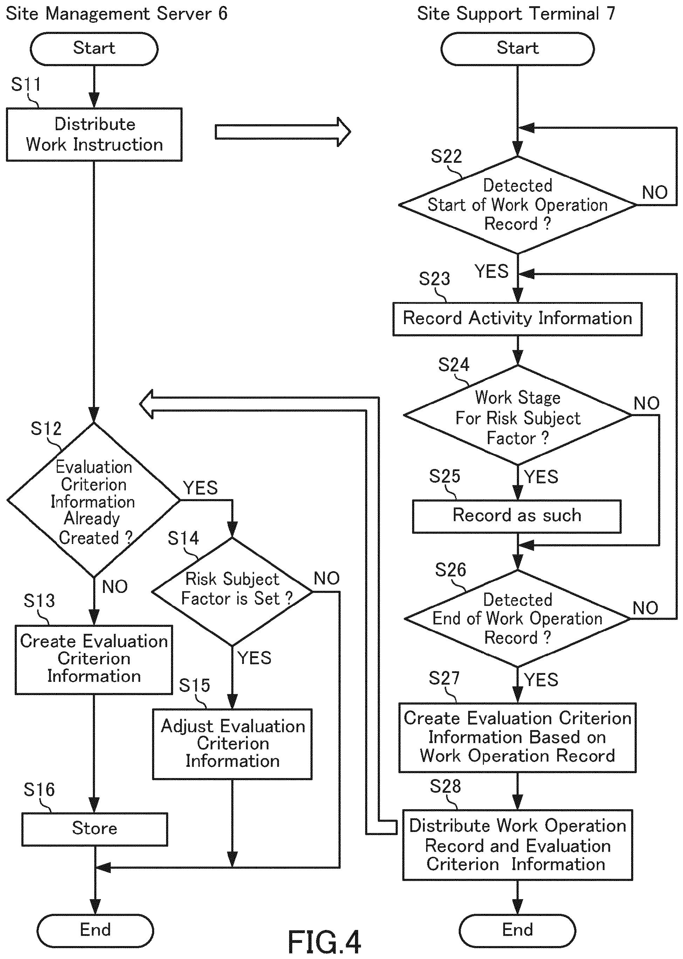

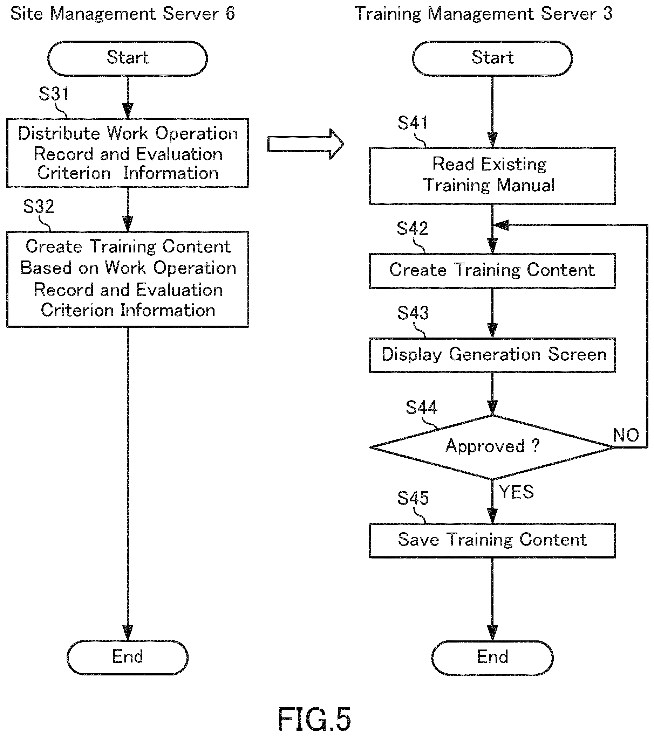

The control operation relating to the first dangerous action suppression function will be described with reference to FIGS. 4 to 7. First, the process to adjust the evaluation criterion information on the work operation in the specific stage of the work procedure related to the information or other stages when predetermined information that can cause accidents in maintenance work is inputted from a predetermined three-dimensional body motion of model worker R2 at the work site will be described with reference to FIGS. 4 and 5.

As shown in FIG. 4, at the start of this process, the site management server 6 first distributes a work instruction to the site support terminal 7 so as to store the activity information of the model worker R2 at the work site (step S11).

Upon receiving the work instruction, the site support terminal 7 determines whether or not the start of the operation record has been detected (step S 22). The start of the operation record can be instructed by a method such as holding the dedicated marker indicated by the hand gesture, which occurs as "start of work", in front of the camera of the site support terminal 7, or the like. Here, if it is determined that the start of the operation record has not been detected (NO in step S22), the detection processing in step S22 is continued. On the other hand, if it is determined that the start of the operation record has been detected (YES in step S22), the operation measurement processing unit 65a takes in and stores the activity information acquired by the measurement information acquisition unit 74 of the site support terminal 7 through the communication unit 62 (step S23).

While the storage processing of the activity information is being executed, the operation measurement processing unit 65a determines whether or not it is a work stage corresponding to the risk subject factor (step S 24). Here, if it is determined that it is not a work phase corresponding to the risk subject factor (NO in step S24), the process proceeds to step S26. On the other hand, if it is determined that it is a work stage corresponding to the risk subject factor (YES in step S24), the operation measurement processing unit 65a records that the activity information being recorded is a work stage corresponding to the risk subject factor, in association with the relevant work stage (step S25), and after the completion of the recording, proceeds to step S26.

In accordance with the process of step S24, for example, the model worker R2 executes an action to notify a dangerous part every time, for example, by voice, during the operation recording of the three-dimensional body movement. To be specific, during the execution of the maintenance work of the work target device step by step, the model worker R2 continues the work while speaking "Do not absolutely touch here.", "You will get burnt if you touch here.", "You will get an electric shock if you touch here." and the like.

On the other hand, at the site support terminal 7, the dangerous action determination processing unit 75b identifies the risk subject factor based on the above-mentioned voices and stores the risk subject factor to the risk subject factor management DB 76b associated with each work stage in which the risk subject factor is spoken out. Then, the operation measurement processing unit 65a executes the process to determine whether it is the work stage corresponding to the risk subject
factor in the above-described step S24, with reference to the risk subject factor management DB 76b.

In step S26, the operation measurement processing unit 65a determines whether or not the end of the work record is detected. If it is determined that the end of the work record has not been detected (NO in step S26), the processing of step S23 and thereafter is repeatedly executed. On the other hand, if it is determined that the end of the work record has been detected (YES in step S26), the evaluation criterion creation processing unit 65b creates the evaluation criterion information including the evaluation value corresponding to each work stage of the simulated work under training, based on the work record created up to then (step S27). Subsequently, the operation measurement processing unit 65a distributes the work record and the evaluation criterion information to the site management server 6 (step S28).

On the other hand, upon receiving the work record and the evaluation criterion information from the site support terminal 7, the site management server 6 determines whether or not the evaluation criterion information has already been created (step S 12). Here, if it is determined that evaluation criterion information has not been created (NO in step S 12), the evaluation criterion information corresponding to the work record is created based on the work record transmitted from the site support terminal 7 (step S13), and respectively stores the work record and the evaluation criterion information (step S16).

On the other hand, upon receiving the work record and the evaluation criterion information from the site support terminal 7, the site management server 6 determines whether or not the evaluation criterion information has already been created (step S 12). Here, if it is determined that evaluation criterion information has been created (YES in step S12), it is determined whether there is a setting of the work stage corresponding to the risk subject factor in the work record transmitted from the site support terminal 7 (Step S14). Here, if it is determined that there is a setting of the work stage corresponding to the risk subject factor (the work stage corresponding to the risk subject factor is referred to as a "specific stage") in the work record (YES in step S14), the site management server 6 adjusts the evaluation value of the evaluation criterion information corresponding to the relevant work stage in the work record (step S15), and after completion of the adjustment process, the series of processes is terminated. If it is determined that there is no setting of the work stage corresponding to the risk subject factor in the work record (NO in step S14), the process is immediately terminated.

After completion of the process of step S16 or after the adjustment process of the evaluation criterion information in step S15, the site management server 6 executes an information transmission process between the site / training with the training management server 3 according to the control sequence shown in FIG. 5.

In the process shown in FIG. 5, first, the site management server 6 distributes a work operation record and evaluation criterion information to the training management server 3 (step S 31). Here, the operation record includes a risk subject factor during the maintenance work of the work target device, and the evaluation criterion information is the information in which the evaluation value is adjusted in correspondence to the work stage of the maintenance work for the risk subject factor.

Upon receiving the work operation record and the evaluation criterion information, the training management server 3 reads the existing training manual (step S41) and executes processing to create the training content based on the work operation record (step S42). This training content is information for causing the trainee R1 to execute maintenance work according to a predetermined work procedure of the work target device as a simulated work, and includes three-dimensional shape information of the work target device and a simulated work space for executing the work as a simulated work.

Upon completion of the training content creation processing in step S42, the training management server 3 displays a screen (creation screen) for displaying the created training content on the display unit 33 (step S43). For example, in the creation screen, in the work phase corresponding to the above-mentioned risk subject factor, content created by superimposing a dangerous action suppression message as a work instruction corresponding to the risk subject factor in the 3D CG image of the work target device may be displayed.

In addition, the training management server 3 determines whether or not there is an instruction to approve the content of the creation screen while displaying the creation screen in step S43 (step S44). Here, if it is determined that there is no instruction to approve the content of the creation screen (NO in step S44), the processing of step S42 and thereafter is continued. On the other hand, if it is determined that there is an instruction to approve the content of the creation screen (YES in step S44), the training content created in step S42 is stored in the content management DB 36a.

In the control sequence shown in FIG. 5, the site management server 6 may execute a process of creating training content based on the work operation record and the evaluation criterion information before and after the distribution process in step S 31. In particular, FIG. 5 shows an example in which the site management server 6 creates training content after completing the distribution processing in step S 31. At this time, in the training management server 3, the dangerous action suppression processing unit 35f may execute a process of storing the information of the risk subject factor (the same content as the risk subject factor management DB 76b) included in the received work operation record to the risk subject factor management DB 36b.

After completing the storing process of the training content at step S 45 in FIG. 5, the training management server 3 executes the training work evaluation control in accordance with the control sequence shown in FIG. 6 in cooperation with the training support terminal 4. In this training work evaluation control, a dangerous action suppression control by the dangerous action suppression processing unit 35f is included (see steps S63 to S65). Therefore, FIG. 6 may also be referred to as an operation sequence between the training management server 3 and the training support terminal 4 related to the first dangerous action suppression control.

In the training work evaluation control shown in FIG. 6, first, the training management server 3 distributes the training content to the training support terminal 4 by the simulated work processing unit 35e (step S 51).

Upon receiving the training content from the training management server 3, the training support terminal 4 starts execution of the training content (step S51). In the processing in step S51, the CPU 41 presents the trainee R1 with the three-dimensional shape information of the work target device and the training contents based on the operation procedure of the maintenance work of the work target device. Specifically, the CPU 41 causes the display unit 43 to display the simulated work space of the virtual reality or the augmented reality (AR), so as to have the trainee Rlexecute the simulated work in the simulated work space, in accordance with the work procedure of the maintenance work of the work target device.

At that time, the trainee R1, like the skilled worker R2, executes the simulated work wearing the HMD, the glove with the DoF sensor, the microphone and the like. As a result, the body motion information such as the motion of the hands and feet or the line of sight and the like of the trainee R1 during the simulated work, is taken in from the measurement information acquisition unit 74 as measurement information. Then, from this measurement information, a work operation record in the simulated work of the trainee R1 is obtained and the work operation record is compared with the evaluation criterion information received together with the work operation record from the site support terminal 7 in the determination processing of S64 and S65 to be described hereinafter, so that the evaluation determination of the simulated work is executed.

After starting the simulated work of the maintenance work of the work target device in the simulated work space in step S61 described above, the training support terminal 4 determines whether or not the screen of the work stage requiring the evaluation determination of the maintenance work as the simulated work is displayed (Step S62). Here, if it is determined that the screen of the work stage requiring evaluation determination is not displayed (NO in step S62), the CPU 41 continues the processing of step S62.

On the other hand, if it is determined that the screen of the work stage requiring evaluation determination is displayed (YES in step S62), the CPU 41 then determines whether or not the determination subject is the risk subject factor (step S63). Here, if it is determined that the determination target is not a risk subject factor (NO in step S63), the CPU 41 executes the evaluation determination process of the maintenance work at this time based on the evaluation criterion information of the work stage, and executes a process of notifying the determination result (step S65).

In step S65, the CPU 41 executes an evaluation process concerning the work of the work stage displayed on the screen based on, for example, the evaluation criterion information acquired from the evaluation criterion creation processing unit 35b of the training management server 3.

On the other hand, if it is determined that the determination target is a risk subject factor (YES in step S63), the CPU 41 executes an evaluation determination process based on the evaluation criterion information of the work stage for the risk subject factor, and if the evaluation determination result is equal to or lower than the predetermined level, an informing process for emphasizing occurrence of a simulated accident is executed (step S64).

The process in step S64 will be described in more detail. According to the control sequence of FIG. 4, if there is a setting of the risk subject factor, the site management server 6 adjusts the evaluation criterion value corresponding to the work stage, based on the evaluation criterion information received together with the work operation record from the site support terminal 7 (See steps S14 and S15). At that time, if the evaluation criterion information is adjusted so as to be stricter than the evaluation criterion information of the usual working stage, the evaluation determination based on the adjusted evaluation value results in a lower evaluation value than the usual work stage. As a method of adjusting the criterion evaluation information, there are a method of adjusting the evaluation value with an adjustment range corresponding to the degree of danger at the time of working on the risk subject factor and a method of adjusting the evaluation value with a preset adjustment range.

Returning to the control sequence of FIG. 6 again, in the process of step S64, in the evaluation determination based on the strict evaluation value of the work stage for the risk subject factor, it is anticipated to result in an evaluation result lower than the evaluation result of the normal work stage. In the present embodiment, in the training support terminal 4, when the evaluation determination result in step S 64 is equal to or lower than the predetermined level, the training support terminal 4 executes notification processing to emphasize occurrence of a simulated accident.

To be specific, for example, such a message as shown in FIG. 7 is displayed, in a case that that the evaluation determination value is lower than the predetermined level, as a result of executing the work in the work stage in spite of the fact that an AR message indicating that "You will get burnt if you touch here." is displayed. In the example of FIG. 7, when simulating the maintenance work on the high-temperature generation element M1 of the work target device M, since the evaluation determination result is lower than the predetermined level, a text message "You have burned now" is displayed in the vicinity of the element.

In the example of FIG. 7, the occurrence of a simulated accident during the execution of the simulated work in which the high-temperature generation element M1 of the work target device M is touched is described, but in the present embodiment it is not limited to this and various applications and variations are possible. As a notification of danger in this kind of simulated accident, the content presentation system according to the present invention may simulatively generate an accident in which the worker touches a high voltage generating element of the work target device M, and make such a notification as "You have an electric shock now". In addition, it is also possible to generate a simulated accident that the worker touches a sharp or edged component of the work target device M and make such a notification as "You have injured now."

In the example of FIG. 7, the occurrence of a simulated accident is notified by a text message. However, the present embodiment is not limited to this, and the notification may be made in a form of sound, light, vibration or an arbitrary combination of text message, a sound, light, vibration or the like.

In the above description, as shown in FIG. 4, when predetermined information that can cause accidents in the maintenance work is inputted from a predetermined three-dimensional body motion of the model worker R2 (steps S24, S25), the step (step S15) for adjusting the evaluation criterion information concerning the work operation in the specific stage of the work procedure relating to the information or in other stages. However, the present embodiment is not limited to this. Regarding this kind of adjustment processing of evaluation criterion information, the above-described adjustment process of the evaluation criterion information may be executed when the predetermined information that can cause an accident in the maintenance work is inputted from the predetermined three-dimensional body motion of the trainee R1 by the training management server 3 and the training support terminal 4.

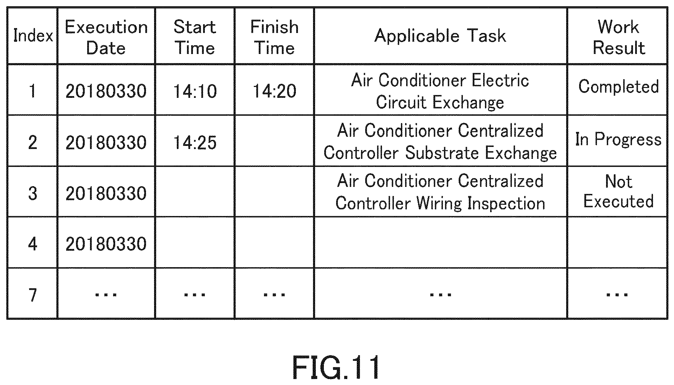

An example of the training content handled by the content presentation system 1 according to the present embodiment will be described with reference to FIGS. 11 to 13.

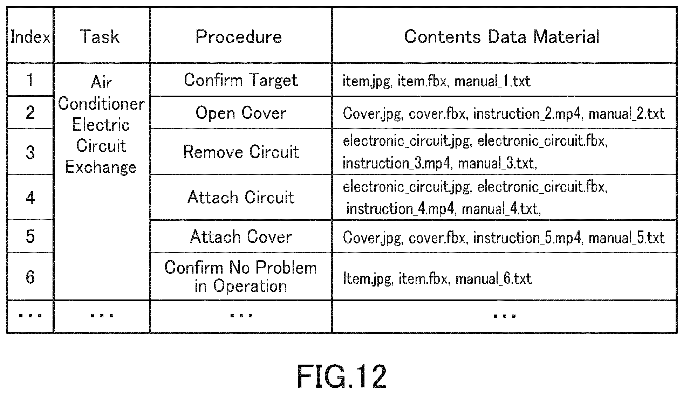

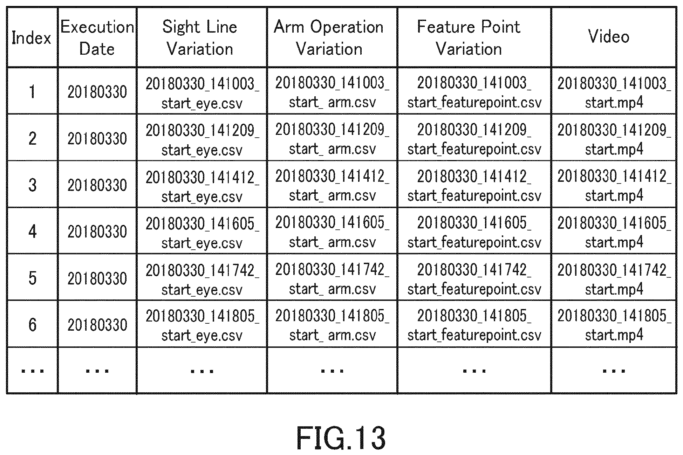

FIG. 11 is an explanatory diagram of a progress table contents showing a progress status of a plurality of tasks managed by the site management server 6 in the content presentation system 1. FIG. 12 is an explanatory diagram of a procedure table contents exemplifying the work procedure of the first task out of the plurality of tasks shown in FIG. 11 and the contents data material including the report from experts in each stage on the work procedure and presented to the trainee. FIG. 13 is an explanatory diagram of a measurement data sheet for collecting the contents data material shown in FIG. 12 from the experts.

In the progress table contents shown in FIG. 11, scheduled date of execution, start / finish time, the corresponding task name and the results of the plurality of tasks are shown together with the index number of the scheduled task. For example, the first task among the tasks is the completed task "Air Conditioner, Electric Circuit Exchange" of the index 1, the next task is the task in progress "Air Conditioner, Substrate Exchange" of the index 2, and the next task is the task not executed "Air Conditioner Centralized Controller, Wiring Inspection" of the index 3.

The procedure table contents shown in FIG. 12 exemplify the procedure corresponding to the first task of the progress table contents shown in FIG. 11, the index in each stage of the work procedure is indicated by a number, task names of the task by the work operation in the plurality of stages are is displayed, and the work operation in each stage is shown as a procedure together with the corresponding contents data material.

In this procedure table contents, with respect to the task name "Air Conditioner, Electric Circuit Exchange" shown in FIG. 12, the work operations of the plurality of stages progress from the work operation "Confirm Target" of the index 1 to the work operation of the index 2 "Open Cover", the work operation of the index 3 "Remove Circuit", the work operation of the index 4 "Attach Circuit", and to the work operation of the index 5 "Attach Cover ", and finish with the work operation of the index 6 "Confirm No Problem in Operation".

Then, based on this progress table contents, the training support terminal 4 displays a picture (item.jpg) or 3D CG (item.fbx) for specifying the work target area and the work target during the work operation of the index 1 and the explanation display (manual_1.txt) on the notes on the current work operation and the like.

Further, during the work operation of the index 2, in order to open the cover, a picture (Cover.jpg) or 3D CG (Cover.fbx) of the cover is displayed, and a video with sound (instruction_2.mp4) for explaining the contents of the current work operation is played back and an explanation (manual_2.txt) is displayed. During the work operation of the index 3, in order to remove the electric circuit before the exchange, a picture (electronic_circuit.jpg) of the electric circuit substrate and the like and the 3D CG (electronic_circuit.fbx) around the attachment position is displayed, and the video with sound (instruction_3.mp4) explaining the contents of the current work operation is played back and an explanation (manual_3.txt) is displayed.

During the work operation of the next index 4, in order to attach the new electric circuit to the exchange target portion, a picture (electronic_circuit.jpg) of the electric circuit substrate or the like and 3D CG (electronic_circuit.fbx) around the attachment position are displayed, and the video with sound (instruction_4.mp4) explaining the current working operation is played back and an explanation (manual_4.txt) is displayed.

During the work operation of the next index 5, in order to attach the cover, a picture (Cover.jpg) or 3D CG (Cover.fbx) of the cover is displayed, and a video with sound (instruction_5.mp4) for explaining the current work operation is played back and an explanation (manual_5.txt) is displayed. During the work operation of the last index 6, in order to confirm that there is no problem in the work operation at each stage in the series of the work procedure stages, a picture (Item.jpg) or 3D CG (item.fbx) for specifying the work target area and work target and an explanation (manual_6.txt) on the notes and the like on the current work operation notes is displayed.

In the present embodiment, when creating a training content accompanied by the information presentation as exemplified above, the skilled worker R2 wearing the site support terminal 7 executes a model work in a predetermined work procedure, before or during the creation of the content incorporating the work procedure, and at least the specific stage in the work operation in which the know-how of the skilled worker 2 should be utilized and the attention should be paid is identified, and the information on the work operation of the model work that constitutes the evaluation criteria for the work operation in the specific stage is obtained (See FIG. 13).

With regard to the work of exchanging the electric circuit of the air conditioner shown in FIG. 12, the work target device is an air conditioner, and the work of removing or attaching the circuit of the air conditioner can be a risk subject factor (for example, a high temperature generating element, high voltage generation element). Further, in the present embodiment, the training content means the information that presents the three-dimensional shape and operation procedure of the work target device in the simulated work space using video, sound, text message and the like, by use of the contents data materials as shown in FIG. 12.

As described above, when the predetermined information that can be a cause of the occurrence of accident in the maintenance work is inputted from the predetermined three-dimensional body motion of the worker R2 or the trainee R1, the first dangerous action suppression function adjusts the evaluation criterion information with respect to the work operation in the specific stage or other stages of the work procedure of the maintenance work related to the information (See S15 in FIG. 4). In addition, this system function increases the probability of occurrence of a simulated accident about the specific stage during the simulated work (work stage targeting the risk subject factor) or other stage of the work operation, and increases the probability of occurrence of the simulated accident, and updates the training content so that the occurrence of the simulated accident strongly impresses the trainee R1 with the occurrence of the accident (See S64 in FIG. 6, and FIG. 7).

By the configuration having the first dangerous action suppression function, it is possible to strongly impress the trainee R1 with the risk with the occurrence of the accident, when having the trainee R1 experience the simulated accident in the maintenance work of the work target device in the simulated work space during the training stage. Thus, when the trainee R1 completes the training and executes the maintenance work of the work target device as a worker at the work site, the trainee R1 can be consciously aware of the risk of occurrence of the accident, thereby making it possible to greatly reduce the risk of the occurrence of the accident compared to the previous maintenance work in which the above-described consciousness has been insufficient.

Further, the first dangerous action suppression function is designed to impress the trainee R1 with the occurrence of the simulated accident by sound, text message, light, vibration and the like. By this configuration, it is possible to strongly and securely impress the trainee R1, who experiences the simulated accident occurrence during the training stage, with the risk of the occurrence of the accident, so that the dangerous action can be more securely suppressed.

### (Second dangerous action suppression function)

The second dangerous action suppression function is a function to extract an item having a high occurrence rate of accident as a result of training of a simulated work related to a predetermined work in the training support terminal 4 based on control by the training management server 3, and to define a risk subject (risk occurrence factor) with regard to the item.

In order to realize this function, the content presentation system 1 has the following configuration in addition to the configuration for realizing the first dangerous action suppression function. For example, the training support terminal 4 has a dangerous action determination processing unit 45a and a risk subject factor management DB 46a, and the site support terminal 7 has a dangerous action determination processing unit 75 b and a risk subject factor management DB 76b. In the training support terminal 4, the dangerous action determination processing unit 45a monitors the occurrence of the accident during the execution of the simulated work (training) of the predetermined work in the simulated work space, and defines the risk factor for the work item having the high accident occurrence rate. To be specific, for each item having a high accident occurrence rate, possible risk is identified and the content of the risk (risk occurrence factor) and the method of avoiding the risk are stored in the risk subject factor management DB 46a correspondingly to the above items.

In the risk subject factor management DB 46a, an item (first item) with high accident occurrence rate and danger content (second item) are provided as setting items. As a result of training, the dangerous action determination processing unit 45a sets (defines) "high place work" and "fall" to the first and the second item, respectively, as an item with high accident occurrence rate, in the case that, for example a high place work is extracted. Further, the dangerous action determination processing section 45a sets "damage of article" and "careless confirmation, careless walk" to the first and the second item, respectively, as an item with high accident occurrence rate, in the case that, for example, a damage of article is extracted.

The content presentation system 1 distributes the definition information set in the risk subject factor management DB of the training support terminal 4 to the site management server 6 via the training management server 3. The site management server 6 further distributes the definition content delivered from the training management server 3 to the site support terminal 7. In the site support terminal 7, the dangerous action determination processing unit 75b stores the definition content delivered from the site management server 6 in the risk subject factor management DB 76b.

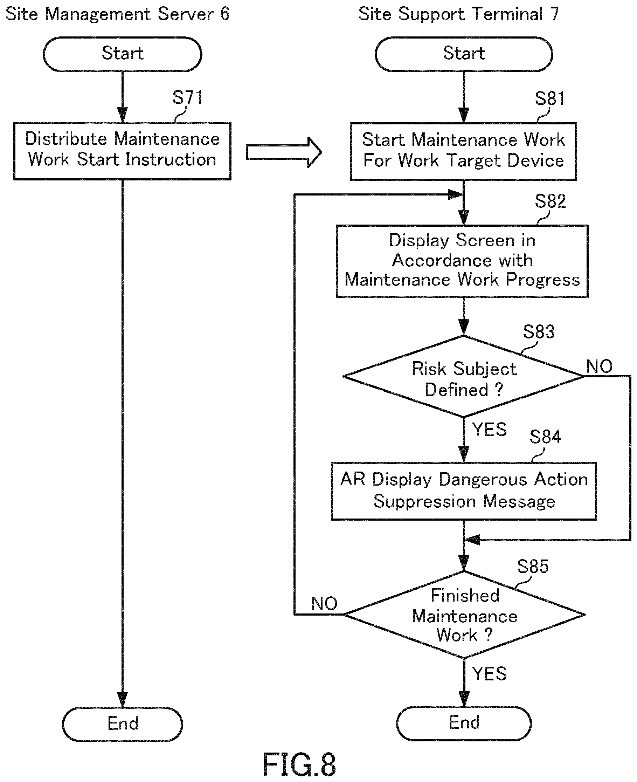

Thereafter, at the site support terminal 7, under the control of the dangerous action suppression processing unit 65f of the site management server 6, the CPU 71 executes the dangerous action suppression control based on the definition of the risk subject stored in the risk subject factor management DB 76b. The dangerous action suppression control will be described with reference to FIG. 8.

In the content presentation system 1, in order to cause the work on the work target device at the site support terminal 7 to be executed, as shown in FIG. 8, a maintenance work start instruction is distributed from the site management server 6 to the site support terminal 7 (Step S71).

The site support terminal 7 starts the work for the work target device by receiving the maintenance work start instruction (step S81). When the work is started, the site support terminal 7 sequentially updates and displays screens corresponding to the respective stages of the work in accordance with the progress of the work (step S82). The screen of each work stage to be displayed is the content of the screen in which work instruction and the like in the work stages corresponding to the work target device (real machine) is displayed in AR.

The site support terminal 7 refers to the risk subject factor management DB 76b in accordance with the progress of the work and determines whether or not a risk subject is defined corresponding to the work stage (step S83). Here, if it is determined that the risk subject is defined (YES in step S38), the CPU 71 displays in AR a dangerous action suppression message on the screen (step S 84). Here, for example, a message "Beware of falling" is displayed if it is a work stage of a high place work, and a message such as "Beware of confirmation. Beware of walking." etc. is displayed if it is a work stage causing a damage of article. Thereafter, the site support terminal 7 moves to step S85.

On the other hand, if it is determined that the dangerous object is not defined (NO in step S83), the site support terminal 7 immediately proceeds to step S85. In step S85, the site support terminal 7 determines whether or not the work has ended. Here, if it is determined that the work has not ended (NO in step S85), the CPU 71 continues the processing in step S83 and thereafter. On the other hand, if it is determined that the work has ended (YES in step S85), the CPU 71 ends the series of the dangerous action suppression control described above.

In the above description, explanation is given to an example in which the dangerous action determination processing unit 45a of the training support terminal 4 has constructed the risk subject factor management DB 46a and distributes the definition information set in the risk subject factor management DB 46a to the site management server 6 and the site support terminal 7, however, the dangerous action determination processing unit 75b in the site support terminal 7 may, for example, monitor the occurrence of the accident during the maintenance work of the work target device by the worker R3, and define the risk subject factor as the risk subject factor management DB 76b for the work item having a high accident occurrence rate.

As described above, the second dangerous action suppression function defines a risk subject for an item having a high accident occurrence rate as a result of training using the simulated workspace, and at the time of the work in the work site, displays in AR the dangerous action suppression message based on the definition. By the configuration having this function, when the trainee R1, having experienced the accident in the training stage, executes the work as the worker R3 in the work site, it is possible to suppress danger in stages.

### (Third dangerous action suppression function)

The third dangerous action suppression function updates the risk subject in accordance with the change in the current situation when there is a description showing the change from the current state in the work report prepared through the work in the work site.

As a component related to this function, the content presentation system 1 has the following configuration in addition to the configuration for realizing the above-described first and second dangerous action suppression functions. This means that the site support terminal 7 has a work report management processing unit 75a and a work report management DB 76a. The work report management processing unit 75a has, for example, a processing function to execute processing for creating a work report that describes the work content of the maintenance work of the work target device and the work environment, and to execute processing for registering the work report in the work report management DB 76a. Further, in the site support terminal 7, the CPU 71 has a processing function related to determining whether or not there is a description about the change in the work content and the work environment between a newly created work report and a work report already registered and the like.

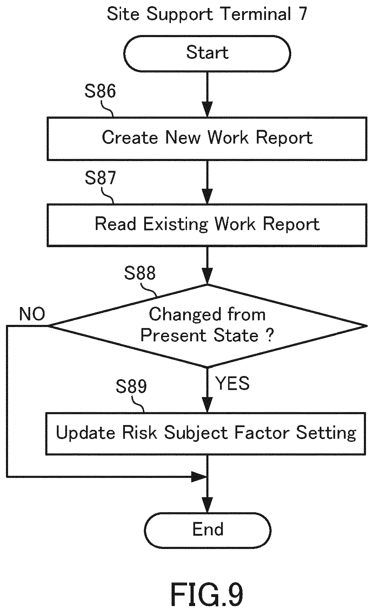

Hereinafter, the third dangerous action suppression control at the site work at the site support terminal 7 will be described with reference to FIG. 9. In order to perform this dangerous action suppression control, the work report management processing unit 75a newly creates a work report on the maintenance work in the site support terminal 7 each time the maintenance work of the work target device is finished (Step S86).

Next, the work report management processing unit 75a reads the pre-work report registered in the work report management DB 76a (step S87), and determines, for example, whether there is a change between the new work report and the preexisting work report (step S88). This determination can be realized, for example, by checking whether or not there is a description indicating a fact that the description of the existing work report has changed with respect to items that can become a risk subject in the new work report.

If it is determined that the current status has changed (YES in step S88), the work report management processing unit 75a performs a process to update the risk subject set in the risk subject factor management DB 76b (step S89).

A specific example of the updating process of the risk subject in step S89 will be described. For example, in the determination in step S88, if there is a description in the new work report that a layout of the room in which the work target device is installed changes to indicate that a narrow passage has been formed, the dangerous action determination process unit 75b adds a new setting item to define an item "passage changes narrower due to layout change" as the first item and an item "wall damage in transportation" as the second item to the risk subject factor management DB 76b.

Thereafter, in the site support terminal 7, under the control of the dangerous action suppression processing unit 65f of the site management server 6, the CPU 71 executes the dangerous action suppression control based on the definition of the risk subject stored in the risk subject factor management DB 76b. The dangerous action suppression control can be executed by a procedure shown in a flowchart of FIG. 8, except for the definition of the risk subject is changed. In addition, in a case where the updating process for adding the setting item described above is executed in step S87 of FIG. 9, a dangerous action suppression message such as "beware of wall damage at transportation" is displayed on the screen in the work site, in the dangerous action suppression processing control.

Thus, the third dangerous action suppression function is adapted to update the risk subject set in the risk subject factor management DB 76b when there is a description on the current status change in the work report. By the configuration having this function, even when there is a change in the current state in the work in the work site, by displaying in AR the dangerous action suppression message conforming to the current situation change on the screen showing a progress of the work, it is possible to suppress the danger in a stepwise manner in accordance with the change of the current state.

### (Fourth dangerous action suppression function)

In order to realize a fourth dangerous action suppression function, the content presentation system 1 has the following configuration in addition to the configuration for realizing the first to third dangerous action suppression functions. For example, in the site support terminal 7, index information such as a type of the target device, site situation, worker skill, and the like are stored in a risk subject factor management DB 76b, in addition to the definition content of the above-described risk subject. This index information can be stored in advance, for example, under the control of a dangerous action determination processing section 75b. In addition, the dangerous action determination processing unit 75b has a function to extract step-wise warning elements from the index information based on the risk subject set in the risk subject factor management DB 76b, and a function to execute a step-wise warning display corresponding to the step-wise warning elements.

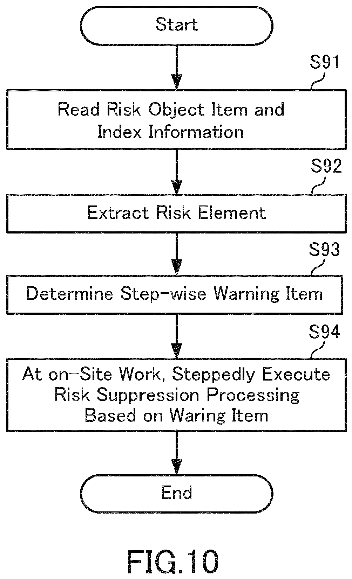

Hereinafter, the fourth dangerous action suppression control in the site support terminal 7 at the time of the work in the work site will be described with reference to FIG. 10.

When this dangerous action suppression control is started in the site support terminal 7, the dangerous action determination processing unit 75b reads the risk subject item and the index information from the risk subject factor management DB 76b (step S91). Subsequently, the dangerous action determination processing unit 75b extracts the risk element from the risk subject item (step S92). Further, the dangerous action determination processing unit 75b determines the stepwise warning item based on the extracted risk element and the index information (step S93).

For example, in a case where the type of the work target device in the site, the site situation, and the worker skill are set as the index information, it is possible to determine the step-wise warning items such as "Call attention in accordance with the skill of the worker at the time of carrying in / out the work target device" and "Call attention in accordance with the skill of the worker at the time of the work of the work target device." in the dangerous action determination processing unit 75b. Further, it is also possible to determine the step-wise warning items such as "Request preliminary confirmation to the control side", "Forcibly turn off the power of the work target device" with respect to the work with a high degree of danger in the dangerous action determination processing unit 75b. The determined step-wise warning items are set in, for example, the risk subject factor management DB 76b.

After setting the step-wise warning items in the above step S93, the dangerous action suppression control moves to a stage of executing the maintenance work of the work target device in the site at the site support terminal 7 (See steps S81 to S85 in FIG. 8). While executing maintenance work of the work target device, the dangerous action determination processing unit 75b executes the processing of step S94 under the control of the dangerous action suppression processing unit 65f of the site management server 6. This means that the dangerous action determination processing unit 75b determines, based on the warning items set in the risk subject factor management DB 76b and determined in the step S93, in accordance with each stage of the work at the time of maintenance work of the work target device in the field (Step S94), and then terminates the series of processes. To be specific, in step S94, warning messages such as "Call attention in accordance with the skill of the worker at the time of carrying in / out the work target device" and "Call attention in accordance with the skill of the worker at the time of the work of the work target device." are processed in a step-wise manner. As a specific example of attention calling, for example, a risk action suppression message that can realize the attention calling is displayed in AR on the screen of each step.

As described above, the fourth dangerous action suppression function is adapted to extract the step-wise warning elements from information such as the target device on the site, the site situation, the worker skill, and the like, based on the risk subject set (defined) in the risk subject factor control DB 76b, and to give a step-wise warning display corresponding to the step-wise warning elements. By the configuration having this function, it is possible for the trainee R1 who can experience a simulated accident in the training in the training management system 5, after finishing the training, suppress the risk in a step-wise manner in accordance with own skill and the like at the time when working in the site as a worker, with respect to the items having a high accident occurrence rate during the training.

### [INDUSTRIAL APPLICABILITY]

As described above, the content presentation system according to the present invention strongly impresses the trainee with the danger of the accident by generating a simulated accident in the training stage, so as to realize an effect to securely suppress the risk of the accident in the maintenance work of the work target device in the work site, thereby making it possible to be applied to a training system in general that executes the training using the 3D CG of the device having a constituent element which endanger the worker.

### [EXPLANATION OF REFERENCE NUMERALS]

1 Content Presentation System
3 Training Management Server
4 Training Support Terminal
5 Training Management System
6 Site Management Server
7 Site Support Terminal
35a, 65a Operation Measurement Processing Unit (Operation Measurement Device)
35b, 65b Evaluation Criterion creation Processing Unit (Evaluation Criterion Creation Device)
35c, 65c Content Creation Processing Unit (Content Creation Device)
35f, 65f Dangerous Action Suppression Processing Unit
36a Content Management Database (DB) (Storage Unit)
45a, 75b Dangerous Action Determination Processing Unit
65f Dangerous Action Suppression Processing Unit (Dangerous Action Suppression Control Unit, Updating Unit, Warning Unit)
75a Work Report Management Processing Unit (Creation Unit)
75b Dangerous Action Determination Processing Unit (Dangerous Action Determination Processing Unit, Setting Unit)
76a Work Report Management Database (DB) (Creation Unit)
76b Risk Subject Factor Management DB (Dangerous Action Determination Processing Unit)
M Work Target Device
M1 High Temperature Generating Element
R1 Trainee
R2 Model Worker
R3 Worker

## Claims

1. A content presentation system that presents a training content to a trainee (R1) based on a three-dimensional shape information of a work target device and a work procedure, and causes a simulated work of an on-site work executed in accordance with the work procedure in a simulated work space of virtual reality or augmented reality, the content presentation system comprising:
(A) a first body motion information detection sensor that collects body motion information of a model worker (R2);
(B) a second body motion information detection sensor that collects body motion information of the trainee;
(C) a site support terminal (7) that stores activity information of the on-site work by the model worker on the actual work target device, together with body motion information of the model worker, as three-dimensional work operation record and creates evaluation criterion information based on the work operation record;
(D) a site management server (6) that receives the work operation record and the evaluation criterion information from the site support terminal;
(E) a training management server (3) that receives the work operation record and the evaluation criterion information from the site management server and creates the training content; and
(F) a training support terminal (4) that receives the training content from the training management server and causes the simulated work to be executed based on the training content, takes in activity information of the simulated work on the virtual work target device of the trainee, as a training time work operation record together with the body motion information collected by the second body motion information detection sensor, takes in a work operation record as a collection time work operation record at the time of the on-site work executed by the model worker, which is already acquired from the site management server by the training management server, and evaluates the accuracy of the work operation of the work procedure by the trainee based on the training time work operation record and the collection time work operation record;
**characterized in that:**
(G) while the storage processing of the activity information is being executed, the site support terminal determines whether or not the activity information is a work stage corresponding to a risk subject factor, if it is determined that the activity information is a work stage corresponding to the risk subject factor, the site support terminal records that the activity information being recorded is a work stage corresponding to the risk subject factor, in association with the relevant work stage;
(H) if there is a setting of the risk subject factor, the site management server adjusts the evaluation criterion value corresponding to the work stage, based on the evaluation criterion information received together with the work operation record from the site support terminal, so as to be stricter than the evaluation criterion information of a usual working stage; and
(I) if it is determined that an evaluation determination target is a risk subject factor, the training support terminal executes an evaluation determination process based on the evaluation criterion information of the work stage for the risk subject factor, and if the evaluation determination result is equal to or lower than a predetermined level, an informing process for emphasizing occurrence of a simulated accident is executed.

2. The content presentation system according to claim 1, wherein
(J) the training management server comprises a dangerous action suppression processing unit (35f) that impresses the trainee with the occurrence of the simulated accident by sound, text message, light, vibration, or the like.

3. The content presentation system according to claim 1 or 2, wherein:
(K) the training support terminal comprises a dangerous action determination processing unit (45a) that monitors the occurrence of the accident during execution of the simulated work of a predetermined work in the simulated work space and defines a risk occurrence factor for the work item having a high accident occurrence rate; and
(L) the site management server comprises a dangerous action suppression control unit (65f) that notifies the worker of the dangerous action caused by the risk occurrence factor in the work of the work item in the on-site work.

4. The content presentation system according to claim 3, wherein:
(M) the site support terminal comprises a creation unit (75a, 76a) that creates a work report describing a work environment of the on-site work; and
an update unit (65f) that determines whether or not there is a description that the work environment has changed from a current state between the created work report and an existing work report already created, and updates the definition of the risk occurrence factor for the work item, in accordance with the changed environment, in the case that there is the description.

5. The content presentation system according to claim 3 or 4, wherein:
(N) the site support terminal comprises a setting unit (75b) that sets a warning item to be executed in a step-wise manner during the on-site work including the work item, based on index information including a definition of the risk occurrence factor and a worker skill of the worker; and
(O) the site management server comprises a warning unit (65f) that gives a warning in a step-wise manner based on the warning item during the on-site work.

## Patentansprüche

1. Inhaltspräsentationssystem, das einem Auszubildenden (R1) auf Basis von dreidimensionalen Forminformationen einer Arbeitszielvorrichtung und einer Arbeitsprozedur Einen Trainingsinhalt präsentiert, und eine simulierte Arbeit einer vor Ort ausgeführten Arbeit gemäß der Arbeitsprozedur in einem simulierten Arbeitsraum virtueller Realität oder erweiterter Realität bewirkt, wobei das Inhaltspräsentationssystem umfasst:
(A) einen ersten Körperbewegungsinformationsdetektionssensor, der Körperbewegungsinformationen eines Modellarbeiters (R2) sammelt;
(B) einen zweiten Körperbewegungsinformationsdetektionssensor, der Körperbewegungsinformationen des Auszubildenden sammelt;
(C) ein Standort-Unterstützungs-Endgerät (7), das Aktivitätsinformationen der Arbeit vor Ort durch den Modellarbeiter auf dem tatsächlichen Arbeitszielgerät zusammen mit Körperbewegungsinformationen des Modellarbeiters als dreidimensionale Arbeitsablaufaufzeichnung speichert, und Bewertungskriterieninformationen auf Basis der Arbeitsablaufaufzeichnung erstellt;
(D) einen Standortverwaltungsserver (6), der die Arbeitsablaufaufzeichnung und die Bewertungskriterieninformationen aus dem Standort-Unterstützungs-Endgerät empfängt;
(E) einen Schulungsverwaltungsserver (3), der die Arbeitsablaufaufzeichnung und die Bewertungskriterieninformationen vom Standortverwaltungsserver empfängt und den Schulungsinhalt erstellt; und
(F) ein Schulungsunterstützungs-Endgerät (4), das den Schulungsinhalt aus dem Schulungsverwaltungsserver empfängt und die Ausführung der simulierten Arbeit auf der Grundlage der Trainingsinhalte veranlasst, Aktivitätsinformationen der simulierten Arbeit an der virtuellen Arbeitszielvorrichtung des Auszubildenden als Trainingszeit-Arbeitsvorgangsaufzeichnung zusammen mit den vom zweiten Körperbewegungsinformationsdetektionssensor gesammelten Körperbewegungsinformationen erfasst, eine Arbeitsvorgangsaufzeichnung als Sammlungszeit-Arbeitsvorgangsaufzeichnung zum Zeitpunkt der vom Modellarbeiter vor Ort ausgeführten Arbeit, das bereits vom Standortverwaltungsserver durch den Schulungsverwaltungsserver erfasst wurde, erfasst, und die Genauigkeit der Arbeitsausführung des Arbeitsablaufs durch den Auszubildenden auf Basis der Trainingszeit-Arbeitsausführungsaufzeichnung und der Sammlungszeit-Arbeitsausführungsaufzeichnung bewertet;
**dadurch gekennzeichnet, dass**:
(G) während die Speicherungsverarbeitung der Aktivitätsinformationen ausgeführt wird, das Standort-Unterstützungs-Endgerät bestimmt, ob die Aktivitätsinformationen eine Arbeitsphase ist, die mit einem Risikosubjektfaktor korrespondiert, ist, oder nicht, falls festgestellt wird, dass die Aktivitätsinformationen eine Arbeitsphase ist, die mit dem Risikosubjektfaktor korrespondiert, das Standort-Unterstützungs-Endgerät aufzeichnet, dass die aufgezeichneten Aktivitätsinformationen eine Arbeitsphase sind, die mit dem Risikosubjektfaktor korrespondiert, in Verbindung mit der relevanten Arbeitsphase;
(H) falls es einen Risikosubjektfaktor gibt, der Standortverwaltungsserver den Bewertungskriterienwert entsprechend der Arbeitsphase auf Basis der Bewertungskriterieninformationen, die zusammen mit der Arbeitsvorgangsaufzeichnunng aus dem Standort-Unterstützungs-Endgerät empfangen wurden, so justiert, dass sie strenger sind als die Bewertungskriterieninformationen einer normalen Arbeitsphase; und
(I) wenn festgestellt wird, dass ein Bewertungsziel ein Risikosubjektfaktor ist, das Schulungsunterstützungsendgerät einen Bewertungsbestimmungsprozess auf Basis der Bewertungskriterieninformationen der Arbeitsphase für den Risikofaktor ausführt, und falls das Bewertungsbestimmungsergebnis gleich oder niedriger als ein vorbestimmtes Niveau ist, ein Informierprozess zur Betonung des Auftretens eines simulierten Unfalls ausgeführt wird.

2. Inhaltpräsentationssystem gemäß Anspruch 1, wobei
(J) der Schulungsverwaltungsserver eine Verarbeitungseinheit zur Unterdrückung gefährlicher Handlungen (35f) umfasst, die den Auszubildenden durch Ton, Textmeldung, Licht, Vibration oder Dergleichen auf das Auftreten des simulierten Unfalls aufmerksam macht.

3. Inhaltspräsentationssystem gemäß Anspruch 1 oder 2, wobei:
(K) das Schulungsunterstützungs-Endgerät eine Verarbeitungseinheit (45a) zur Ermittlung gefährlicher Handlungen umfasst, die das Auftreten des Unfalls während der Ausführung der simulierten Arbeit einer vorbestimmten Arbeit im simulierten Arbeitsraum überwacht und einen Risikoauftrittsfaktor für das Arbeitselement mit einer hohen Unfallauftrittsrate definiert; und
(L) der Standortverwaltungsserver eine Steuereinheit zur Unterdrückung gefährlicher Handlungen (65f) umfasst, die den Arbeiter über die gefährliche Handlung informiert, die durch den Risikofaktor bei der Arbeit des Arbeitselements an der Arbeit vor Ort verursacht wurde.

4. Inhaltspräsentationssystem gemäß Anspruch 3, wobei:
(M) das Standort-Unterstützungs-Endgerät eine Erzeugungseinheit (75a, 76a) umfasst, die einen Arbeitsbericht erstellt, der eine Arbeitsumgebung der Arbeiten vor Ort beschreibt; und
eine Aktualisierungseinheit (65f), die feststellt, ob eine Beschreibung vorliegt, dass sich die Arbeitsumgebung von einem aktuellen Zustand zwischen dem Erstellen des Arbeitsberichts und dem bereits erzeugten Arbeitsbericht geändert hat, und die Definition des Risikoauftrittsfaktors für das Arbeitselement entsprechend der geänderten Umgebung, sofern eine Beschreibung vorhanden ist, aktualisiert.

5. Inhaltspräsentationssystem gemäß Anspruch 3 oder 4, wobei:
(N) das Standortunterstützungs-Endgerät eine Einstelleinheit (75b) umfasst, die ein Warnelement festlegt, das während der Vor-Ort-Arbeit einschließlich des Arbeitselements schrittweise ausgeführt werden soll, basierend auf Indexinformationen, die eine Definition des Risikoauftrittsfaktors und eine Fertigkeit des Arbeiters umfassen; und
(O) der Standortverwaltungsserver eine Warneinheit (65f) umfasst, die eine Warnung in einem schrittweisen Verfahren auf Basis des Warnungselements während der Arbeiten vor Ort ausgibt.

## Revendications

1. Système de présentation de contenu qui présente un contenu de formation pour un stagiaire (R1) sur la base d'une information de forme tridimensionnelle d'un dispositif cible de travail et d'une procédure de travail, et amène un travail simulé d'un travail sur site à être exécuté conformément à la procédure de travail dans un espace de travail simulé de réalité virtuelle ou de réalité augmentée, le système de présentation de contenu comprenant :
(A) un premier capteur de détection d'informations de déplacement de corps qui collecte des informations de déplacement de corps d'un travailleur modèle (R2) ;
(B) un second capteur de détection d'informations de déplacement de corps qui collecte des informations de déplacement de corps du stagiaire ;
(C) un terminal de support de site (7) qui stocke des informations d'activité du travail sur site par le travailleur modèle sur le dispositif cible de travail réel, ainsi que des informations de déplacement de corps du travailleur modèle, comme un enregistrement d'opération de travail tridimensionnel et crée des informations de critère d'évaluation sur la base de l'enregistrement d'opération de travail ;
(D) un serveur de gestion de site (6) qui reçoit l'enregistrement d'opération de travail et les informations de critère d'évaluation à partir du terminal de support de site ;
(E) un serveur de gestion de formation (3) qui reçoit l'enregistrement d'opération de travail et les informations de critère d'évaluation à partir du serveur de gestion de site et crée le contenu de formation ; et
(F) un terminal de support de formation (4) qui reçoit le contenu de formation à partir du serveur de gestion de formation et amène le travail simulé à être exécuté sur la base du contenu de formation, recueille des informations d'activité du travail simulé sur le dispositif cible de travail virtuel du stagiaire, comme un enregistrement d'opération de travail de temps de formation ainsi que les informations de déplacement de corps collectées par le second capteur de détection d'informations de déplacement de corps, recueille un enregistrement d'opération de travail comme un enregistrement d'opération de travail de temps de collecte au moment de l'exécution du travail sur site par le travailleur modèle, qui est déjà acquis à partir du serveur de gestion de site par le serveur de gestion de formation, et évalue la précision de l'opération de travail de la procédure de travail par le stagiaire sur la base de l'enregistrement d'opération de travail de temps de formation et de l'enregistrement d'opération de travail de temps de collecte ;
**caractérisé en ce que :**
(G) tandis que le traitement de stockage des informations d'activité est exécuté, le terminal de support de site détermine si les informations d'activité constituent ou non une étape de travail correspondant à un facteur de sujet de risque, s'il est déterminé que les informations d'activité constituent une étape de travail correspondant au facteur de sujet de risque, le terminal de support de site enregistre le fait que l'enregistrement des informations d'activité en cours est une étape de travail correspondant au facteur de sujet de risque, en association avec l'étape de travail pertinente ;
(H) s'il existe un réglage du facteur de sujet de risque, le serveur de gestion de site ajuste la valeur de critère d'évaluation correspondant à l'étape de travail, sur la base des informations de critère d'évaluation reçues ainsi que de l'enregistrement d'opération de travail à partir du terminal de support de site, de manière à être plus stricte que les informations de critère d'évaluation d'une étape de travail habituelle ; et
(I) s'il est déterminé qu'une cible de détermination d'évaluation est un facteur de sujet de risque, le terminal de support de formation exécute un processus de détermination d'évaluation sur la base des informations de critère d'évaluation de l'étape de travail pour le facteur de sujet de risque, et si le résultat de détermination d'évaluation est égal à ou inférieur à un niveau prédéterminé, un processus d'information pour mettre en évidence l'occurrence d'un accident simulé est exécuté.

2. Système de présentation de contenu selon la revendication 1, dans lequel
(J) le serveur de gestion de formation comprend une unité de traitement de suppression d'action dangereuse (35f) qui présente au stagiaire l'occurrence de l'accident simulé par un son, un message texte, un témoin, une vibration, ou similaires.

3. Système de présentation de contenu selon la revendication 1 ou 2, dans lequel :
(K) le terminal de support de formation comprend une unité de traitement de détermination d'action dangereuse (45a) qui surveille l'occurrence de l'accident au cours de l'exécution du travail simulé d'un travail prédéterminé dans l'espace de travail simulé et définit un facteur d'occurrence de risque pour l'élément de travail présentant un taux d'occurrence d'accident élevé ; et
(L) le serveur de gestion de site comprend une unité de contrôle de suppression d'action dangereuse (65f) qui notifie le travailleur de l'action dangereuse causée par le facteur d'occurrence de risque dans le travail de l'élément de travail dans le travail sur site.

4. Système de présentation de contenu selon la revendication 3, dans lequel :
(M) le terminal de support de site comprend une unité de création (75a, 76a) qui crée un rapport de travail décrivant un environnement de travail du travail sur site ; et
une unité de mise à jour (65f) qui détermine s'il existe ou non une description que l'environnement de travail a changée par rapport à un état réel entre le rapport de travail créé et un rapport de travail existant déjà créé, et met à jour la définition du facteur d'occurrence de risque pour l'élément de travail, conformément à l'environnement changé, dans le cas où la description existe.

5. Système de présentation de contenu selon la revendication 3 ou 4, dans lequel :
(N) le terminal de support de site comprend une unité de réglage (75b) qui règle un élément d'avertissement à exécuter d'une manière échelonnée au cours du travail sur site incluant l'élément de travail, sur la base d'informations d'index incluant une définition du facteur d'occurrence de risque et d'une compétence de travailleur du travailleur ; et
(O) le serveur de gestion de site comprend une unité d'avertissement (65f) qui émet un avertissement d'une manière échelonnée sur la base de l'élément d'avertissement au cours du travail sur site.
